# EUROPÄISCHE PATENTANMELDUNG

(11) **EP 2 936 980 A1**
(43) Veröffentlichungstag der Anmeldung: **28.10.2015**
(21) Anmeldenummer: 15161049.0
(22) Anmeldetag: 26.03.2015
(51) Int. Cl.: A01M 7/00

(54) **Feldspritze**

(30) Priorität: 23.04.2014 DE 102014207595
(71) Anmelder: ROBERT BOSCH GMBH, 70442 Stuttgart (DE)
(72) Erfinder: Stratmann, Hubert, 89297 Roggenburg (DE); Rosenbaum, Benjamin, 59759 Arnsberg (DE)
(74) Vertreter: Thürer, Andreas

(57) **Zusammenfassung**

Offenbart ist eine Feldspritze mit einem in Fahrtrichtung gerichtete Längsachse und eine sich im Wesentlichen quer zur Längsachse erstreckende Gestänge. Das Gestänge ist über einen Aktor um eine Schwenkachse schwenkbar, um unerwünschte Neigungsbewegungen zu kompensieren. Dies geschieht in Abhängigkeit der Messsignale eines direkt am Gestänge befestigten Beschleunigungssensors. Über ihn wird eine unerwünschte Neigungsbewegung direkt am Gestänge und daher unter Berücksichtigung aller Einflussfaktoren ermittelt. Damit können auch auf die Neigung des Gestänges einwirkende Störgrößen ausgeregelt werden, die nicht über einen Rahmen der Feldspritze auf das Gestänge einwirken. Eine Steuereinheit steuert den Aktor derart an, dass eine Gegenneigung erzeugt wird. Dies geschieht während der unerwünschten Neigungsbewegung und im Idealfall zu deren Beginn.

## Beschreibung

Die Erfindung betrifft eine Feldspritze gemäß dem Oberbegriff des Patentanspruchs 1.

Mit derartigen Feldspritzen werden Flüssigkeiten (insbesondere Dünger oder Pflanzenschutzmittel) auf Feldern gleichmäßig verteilt. Dazu haben Feldspritzen eine Auslegervorrichtung mit zwei seitlichen Armen, die z.B. als Gestänge ausgebildet sind, und an denen eine Vielzahl von Düsen für die Flüssigkeit angeordnet ist. Die Auslegerarme sind meistens seitlich ausklappbar und können Arbeitsbreiten von bis zu 50m erreichen.

Grundsätzlich benötigen die Feldspritzen neben der Auslegervorrichtung mit den Düsen einen Tank für die Flüssigkeit und eine Pumpe, um die Flüssigkeit zu den Düsen zu fördern. Als unterschiedliche Bauweisen sind an- beziehungsweise aufgebaute, angehängte und selbst fahrende Feldspritzen bekannt. Angebaute Feldspritzen werden an das Hubwerk eines Traktors angelenkt, während aufgebaute Feldspritzen auf die Ladefläche eines Multifunktionsfahrzeugs aufgesetzt werden. Angehängte Feldspritzen werden als ein- oder zweiachsiger Anhänger von einem Traktor gezogen.

Die Auslegerarme sollen im Betrieb der Feldspritze stets mit gleichem Abstand zum Boden, also in Idealfall parallel zum Boden, ausgerichtet werden. Wenn z.B. eine einseitige Erhebung überfahren wird, muss die Auslegervorrichtung um eine Längsachse der Feldspritze geschwenkt und die betroffene Seite entsprechend angehoben werden. Wenn eine Kurve gefahren wird (z.B. bei einer Wendung an Ende des Feldes) neigt sich die Feldspritze durch die Zentrifugalkraft wodurch die Auslegervorrichtung einer Seite abgesenkt wird, so dass sie an dieser Seite entsprechend angehoben werden muss.

Um dies zu erreichen, wird Regelungstechnik eingesetzt, deren Aktoren die Auslegervorrichtung gegenüber einem Rahmen der Feldspritze um die Längsachse verschwenken. Je größer die Arbeitsbreite der Feldspritze ist, desto schneller muss die Regelung arbeiten und desto stärker und schneller müssen die Aktoren die korrigierende Schwenkbewegung ausführen.

In der Druckschrift DE 10 2011 052 705 A1 ist eine angehängte Feldspritze offenbart, die einen rahmenfesten Drehratensensor aufweist. Dieser soll im Zusammenwirken mit einem Bordcomputer des ziehenden Traktors eine Kurvenfahrt (oder Wendefahrt) des Gespanns erkennen und frühzeitig bevor sich die Auslegervorrichtung neigt eine Gegenbewegung auslösen. Ergänzend sind Abstandsensoren an den Enden der Auslegervorrichtung vorgesehen, deren Messdaten auch an den Bordcomputer des Traktors übermittelt werden.

Da aus einer Drehung um die Hochachse nur in Zusammenhang mit der aktuelle Fahrgeschwindigkeit auf die "drohende" Neigung der Feldspritze und damit auf die Neigung ihrer Auslegervorrichtung geschlossen werden kann, ist dabei eine Berücksichtigung der Fahrgeschwindigkeit unerlässlich.

Nachteilig an derartigen Feldspritzen ist, dass die zu erfassenden Rotationen um die Hochachse vergleichsweise gering sind. Daher ist ein sehr empfindlicher Drehratensensor nötig. Dies gilt insbesondere bei einer vergleichsweise schnell gefahrenen Kurve, bei der bereits eine vergleichsweise geringe Rotation ausreicht, um eine starke Neigung der Auslegervorrichtung zu erzeugen.

Nachteilig an derartigen Feldspritzen ist weiterhin, dass Störgrößen nicht berücksichtigt werden. So haben z.B. die Befüllung des Tanks und damit das

Gewicht der Feldspritze einen maßgeblichen Einfluss auf ihre Zentrifugalkraft und damit auf ihre Neigung während einer Kurvenfahrt. Hinzu kommen Befüllung der Reifen und Härte des Untergrundes als Störgrößen.

Schließlich hat sich in der Praxis gezeigt, dass sich der kurveninnere Auslegerarm nicht - wie in der DE 10 2011 052 705 A1 ausgeführt - nach unten, sondern nach oben neigt.

Dem gegenüber liegt der Erfindung die Aufgabe zu Grunde, eine Feldspritze zu schaffen, die die genannten Nachteile vermeidet. Insbesondere soll die Befüllung des Tanks und die Befüllung der Reifen und die Härte des Bodens, die sich auf die Neigung der Auslegervorrichtung auswirken, bei der korrigierenden Bewegung berücksichtigt werden.

Diese Aufgabe wird gelöst durch eine Feldspritze mit den Merkmalen des Patentanspruchs 1.

Die beanspruchte Feldspritze hat eine in Fahrtrichtung gerichtete Längsachse und eine sich im Wesentlichen quer zur Längsachse erstreckende Auslegervorrichtung mit Düsen. Die Auslegervorrichtung kann eine beidseitige durchgehende Auslegervorrichtung oder ein einseitiger Auslegerarm sein. Sie kann ein Rohrprofil oder vorzugsweise ein Gestänge sein. Die Auslegervorrichtung ist über zumindest einen Aktor um eine Schwenkachse schwenkbar, um seitliche Neigungen einzustellen und insbesondere zu eliminieren. Dies geschieht in Abhängigkeit der Messsignale eines Beschleunigungssensors. Die Schwenkachse kann etwa parallel zur Längsachse sein. Erfindungsgemäß ist der Beschleunigungssensor direkt an der Auslegervorrichtung angeordnet. Über ihn wird eine unerwünschte Neigungsbewegung direkt an der Auslegervorrichtung und daher unter Berücksichtigung aller Einflussfaktoren ermittelt. Damit können erfindungsgemäß auch auf die Neigung der Auslegervorrichtung einwirkende Störgrößen ausgeregelt werden, die nicht über einen Rahmen der Feldspritze, sondern direkt an der Auslegervorrichtung einwirken. Eine Steuereinheit steuert den Aktor derart an, dass eine Gegenneigung erzeugt wird. Dies geschieht während der unerwünschten Neigungsbewegung und im Idealfall zu deren Beginn.

Der Beschleunigungssensor kann gemäß einer ersten Variante ein Gyroskop beziehungsweise Drehratensensor sein. Die von ihm ermittelte Drehbeschleunigung ist vorzugsweise um die Längsachse gerichtet.

Ergänzend oder alternativ kann der Beschleunigungssensor gemäß einer zweiten Variante dazu ausgebildet sein, dass er eine etwa senkrechte translatorische Beschleunigung und damit eine Bewegung des betroffen Abschnitts der Auslegervorrichtung in der gleichen Richtung ermittelt. Dazu wird der Beschleunigungssensor beabstandet zur Schwenkachse angeordnet. Je größer der Abstand des Beschleunigungssensors von der Schwenkachse oder Längsachse ist, desto deutlicher ist die Beschleunigung senkrecht zum Boden, die von dem Beschleunigungssensor erfasst wird, und desto definierter kann die Regelung der Steuereinheit ansprechen.

Im Falle der beidseitigen durchgehenden Auslegervorrichtung kann ein Paar von Beschleunigungssensoren vorgesehen sein, die beidseitig der Längsachse an den beiden Armen angeordnet sind.

Es wird besonders bevorzugt, wenn der Beschleunigungssensor am äußeren Endabschnitt der Auslegervorrichtung angeordnet ist. Damit sind die Rauschfreiheit des Messsignals des Beschleunigungssensors und die Regelgüte optimiert. Im Falle der beidseitigen durchgehenden Auslegervorrichtung sind die beiden Beschleunigungssensoren an den jeweiligen äußeren Endabschnitten der beiden Arme angeordnet.

Da der Aktor eine Abstützung benötigt, hat die Feldspritze vorzugsweise einen Rahmen. An diesem ist bei einer besonders bevorzugten Weiterbildung ein weiterer rahmenfester Beschleunigungssensor befestigt. Dieser kann Beschleunigungen erfassen, die zunächst auf den Rahmen einwirken, bevor sie auf die Auslegervorrichtung übertragen werden. Diese zeitliche Verzögerung kann sich durch elastische Verformung des Rahmens, einer Aufhängung zwischen dem Rahmen und der Auslegervorrichtung und / oder der Auslegervorrichtung selbst ergeben. Damit kann die Steuereinheit die unerwünschte Neigung der Auslegervorrichtung vorausberechnen. Im kann der Aktor die Gegenneigung in dem Zeitraum einstellen, in den auch die Auslegervorrichtung die unerwünschte Neigung ausführen würde.

Mit dem rahmenfesten Beschleunigungssensor können auch weitere Funktionen wie Stabilitätsprogramm (ESP), Verlagerung eines Schwerpunktes bei Straßenfahrt, Geschwindigkeitsbegrenzung oder Lenkwinkelbegrenzung am Traktor oder an einer selbst fahrenden Feldspritze ermöglicht werden. Die Geschwindigkeitsbegrenzung oder Lenkwinkelbegrenzung wird insbesondere bei hohem Schwerpunkt der Feldspritze aktiviert, um deren Umkippen zu verhindern.

Wenn der rahmenfeste Beschleunigungssensor und die Steuereinheit auf einer gemeinsamen Leiterplatte angeordnet sind, entfallen Stecker und Kabel zwischen den beiden Komponenten.

Der Beschleunigungssensor der Auslegervorrichtung oder insbesondere der rahmenfeste Beschleunigungssensor kann ein Sechs-Achsen-Beschleunigungssensor sein, der neben den translatorischen Beschleunigungen der drei Raumachsen auch und die drei entsprechenden rotatorischen Beschleunigungen erfasst.

Der Beschleunigungssensor der Auslegervorrichtung oder insbesondere der rahmenfeste Beschleunigungssensor kann ein Neun-Achsen-Beschleunigungssensor sein, der neben den translatorischen und den rotatorischen Beschleunigungen der drei Raumachsen drei Erd-Magnetfeld-Sensoren aufweist.

An der Auslegervorrichtung kann ein mittlerer Abstandssensor (insbesondere Ultraschallsensor) angeordnet sein. Im Zusammenwirken mit dem zumindest einen Beschleunigungssensor kann der Abstand zum Boden mit hoher Güte ausgeregelt werden.

An der Auslegervorrichtung können zwei äußere Abstandssensoren (insbesondere Ultraschallsensoren) angeordnet sein. Insbesondere bei großen Arbeitsbreiten an der Auslegervorrichtung kann zwischen dem jeweiligen äußeren Abstandssensor und der Längsachse jeweils ein weiterer Abstandssensor angeordnet sein. Damit können auch Bodenunebenheiten mit hoher Güte ausgeregelt werden. Weiterhin können durch die Abstandssensoren die Ergebnisse des zumindest einen plausibilisiert werden. Anders herum können auch durch den zumindest einen Beschleunigungssensor die Abstandssensoren plausibilisiert werden, etwa um bei einer Erfassung von Steinen oder ungleich hohen Pflanzen nicht ständig die Einstellung des Auslegervorrichtung zu verändern.

Wenn die erfindungsgemäße Feldspritze als angehängte Feldspritze ausgebildet ist, wird es besonders bevorzugt, wenn sie zwei Achsen und mit eine elektronische Zwangslenkung aufweist. Damit können bei Kurvenfahrten Spurschäden der Pflanzen des Feldes verringert werden. Durch die Zwangslenkung werden der Kurvenradius und damit die Zentrifugalkraft der Feldspritze bei gleichbleibender Kurvenfahrt des Traktors erhöht, so dass die unerwünschte Neigung der Auslegervorrichtung verstärkt wird. Bei dieser Weiterbildung sind der Nutzen beziehungsweise die Wichtigkeit des zumindest einen erfindungsgemäßen erhöht.

Um eine hohe Arbeitsbreite bei gleichzeitiger Straßentauglichkeit zu erreichen wird es bevorzugt, wenn die Auslegervorrichtung an jedem Arm zumindest zwei Klappstellen und an jeder Klappstelle einen Aktor hat. Damit wird eine besonders große Arbeitsbreite der Feldspritze erreicht, wodurch der Nutzen beziehungsweise die Wichtigkeit des zumindest einen erfindungsgemäßen erhöht sind.

Im Folgenden wird anhand der Figuren ein Ausführungsbeispiel einer erfindungsgemäßen Feldspritze detailliert beschrieben.

Es zeigen
Figur 1 das Ausführungsbeispiel in einer Draufsicht und
Figur 2 die Feldspritze gemäß Figur 1 in einer Ansicht von hinten.

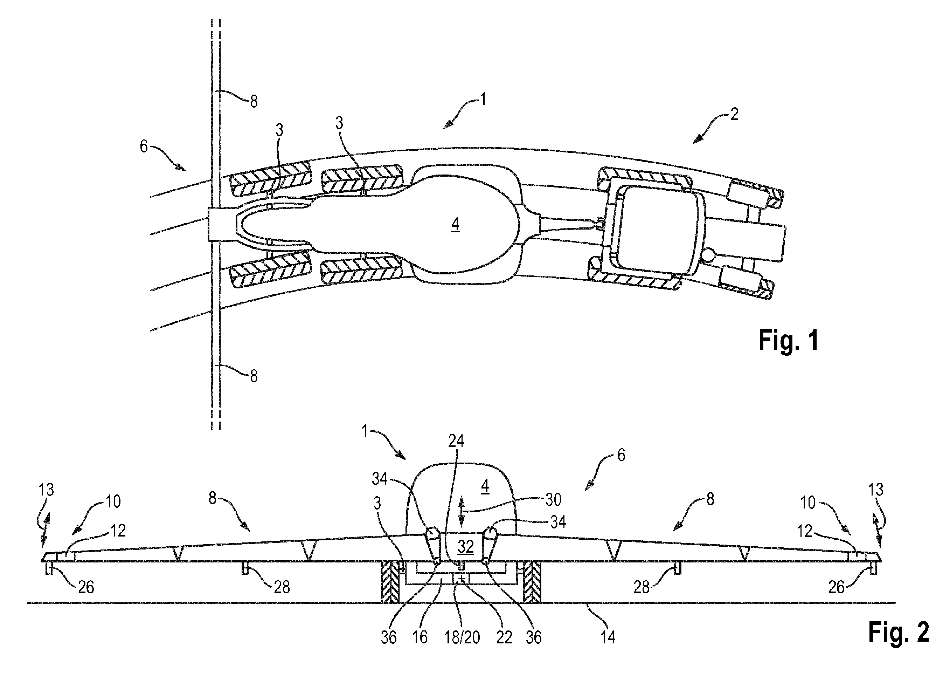

Figur 1 zeigt das Ausführungsbeispiel der erfindungsgemäßen Feldspritze 1, die als Anhänger mit zwei lenkbaren Achsen 3 ausgeführt ist, und an einen Traktor 2 angehängt ist. Die Feldspritze 1 hat einen Tank 4, dessen Flüssigkeit gleichmäßig auf dem Boden verteilt werden soll. Dazu ist am Heck der Feldspritze 1 eine Auslegervorrichtung 6 angelenkt, deren beiden Arme 8 sich quer zur Fahrtrichtung des Traktors 2 und der Feldspritze 1 erstrecken. Dabei sind in Figur 1 die Arme 8 nur teilweise dargestellt.

An einer Unterseite der beiden Arme 8 ist eine Vielzahl von (nicht gezeigten) Düsen angeordnet, wobei eine (nicht gezeigte) Pumpe die Flüssigkeit aus dem Tank 4 zu den Düsen fördert, wodurch die Flüssigkeit auf dem Boden verteilt wird.

Durch die beiden mit einer elektronischen Zwangslenkung versehen Achsen 3 folgt die angehängte Feldspritze 1 bei einer Kurvenfahrt des Traktors 2 im Wesentlichen dessen Spur. Damit wird der Kurvenradius der Feldspritze 1 bei gleichbleibender Geschwindigkeit des Traktors 2 im Vergleich zu nicht gelenkten Achsen erhöht, wodurch die Zentrifugalkraft an der Feldspritze 1 erhöht wird. Dadurch neigt sich die Feldspritze 1 nach außen, wodurch sich eine unerwünschte Neigung der Auslegervorrichtung 8 ergibt.

Figur 2 zeigt die erfindungsgemäße Feldspritze 1 in einer Ansicht von hinten. Dabei sind die beiden Arme 8 einschließlich ihrer Endabschnitte 10 dargestellt. Auf Grund der Kurvenfahrt wird der Endabschnitt 10 des kurvenäußeren Arms 8 gemäß dem Doppelpfeil 13 abgesenkt, während der Endabschnitt 10 des kurveninneren Arms 8 gemäß dem Doppelpfeil 13 angehoben wird.

An den beiden Endabschnitten 10 ist jeweils ein Beschleunigungssensor 12 befestigt, der insbesondere Auf- und Abwärtsbewegungen, also Bewegungen senkrecht zum Boden 14 erfasst. Weiterhin sind an einem Rahmen 16 der Feldspritze 1 auf einer gemeinsamen Leiterplatte eine Steuereinheit 18 und ein Sechs-Achsen-Beschleunigungssensor 20 angeordnet, wobei eine erste Raumachse des Sechs-Achsen-Beschleunigungssensors 20 entlang einer Längsachse 22 der Feldspritze 1 und die beiden anderen Raumachsen senkrecht dazu angeordnet sind. Damit kann der Sechs-Achsen-Beschleunigungssensor 20 Beschleunigungen und damit Bewegungen des Rahmens 16 der Feldspritze 1 erfassen, noch bevor diese an die Auslegervorrichtung 6 übertragen werden. Diese verzögerte Übertragung von Bewegungen des Rahmens 16 an die Auslegervorrichtung 6 ergibt sich durch Elastizitäten insbesondere in der Anlenkung der Auslegervorrichtung 6 an den Rahmen. Damit übermitteln die beiden an der Auslegervorrichtung 6 direkt befestigten Beschleunigungssensoren 12 jeweils die unerwünschten Neigungsbewegungen der Auslegervorrichtung 6, wobei zum Beispiel Windböen berücksichtigt werden. Dabei ist zunächst eine unerwünschte Neigungsbewegung 13 nötig, bevor die Steuereinheit 18 ansprechen kann. Der am Rahmen 16 befestigte Sechs-Achsen-Beschleunigungssensor 20 hingegen kann nur Einflussfaktoren erfassen, die über den Rahmen 16 an die Auslegervorrichtung 6 übertragen werden. Dabei hat dieser Sensor 20 den Vorteil, dass er Messsignale an die Steuereinheit 18 übertragen kann, bevor die Auslegervorrichtung 6 mit der unerwünschten Neigungsbewegung 13 beginnt.

Schließlich sind noch ein mittlerer Abstandssensor 24, zwei äußere Abstandssensoren 26 und zwei weitere Abstandssensoren 28 etwa in einem Mittelbereich des jeweiligen Arms angeordnet, die als Ultraschallsensoren ausgebildet sind und ihre Messsignale ebenfalls an die Steuereinheit 18 übertragen. Über diese Abstandsensoren 24, 26, 28 wird einerseits der Abstand der beiden Arme 8 zum Boden 14 erfasst, wobei gleichzeitig Unebenheiten des Bodens 14 erfasst werden.

In Abhängigkeit der übertragenen Messsignale aller Sensoren 12, 20, 24, 26, 28 wird einerseits eine (nicht gezeigte) Hubvorrichtung angesteuert, über die die Höhe eines mittleren Abschnitts 32 der Auslegervorrichtung 6 gegenüber dem Rahmen 16 gemäß dem Doppelpfeil 30 eingestellt werden kann. Weiterhin werden von der Steuereinheit 18 zwei Aktoren 34 angesteuert, über die die Neigung gemäß dem Doppelpfeil 13 jeweils eines Armes 8 eingestellt werden kann. Dazu wird jeder Arm 18 um eine zugeordnete Schwenkachse 36 verschwenkt, die etwa parallel zur Längsachse 22 der Feldspritze 1 ausgerichtet ist.

Offenbart ist eine Feldspritze mit einem in Fahrtrichtung gerichtete Längsachse und eine sich im Wesentlichen quer zur Längsachse erstreckende Gestänge. Das Gestänge ist über einen Aktor um eine Schwenkachse schwenkbar, um unerwünschte Neigungsbewegungen zu kompensieren. Dies geschieht in Abhängigkeit der Messsignale eines direkt am Gestänge befestigten Beschleunigungssensors. Über ihn wird eine unerwünschte Neigungsbewegung direkt am Gestänge und daher unter Berücksichtigung aller Einflussfaktoren ermittelt. Damit können auch auf die Neigung des Gestänges einwirkende Störgrößen ausgeregelt werden, die nicht über einen Rahmen der Feldspritze auf das Gestänge einwirken. Eine Steuereinheit steuert den Aktor derart an, dass eine Gegenneigung erzeugt wird. Dies geschieht während der unerwünschten Neigungsbewegung und im zu deren Beginn.

### Bezugszeichenliste

- 1: angehängte Feldspritze
- 2: Traktor
- 3: Achse
- 4: Tank
- 6: Auslegervorrichtung
- 8: Arm
- 10: Endabschnitt
- 12: Beschleunigungssensor
- 13: Doppelpfeil der Neigungsbewegung
- 14: Boden
- 16: Rahmen
- 18: Steuereinheit
- 20: Sechs-Achsen-Beschleunigungssensor
- 22: Längsachse
- 24: mittlerer Abstandssensor
- 26: äußerer Abstandssensor
- 28: weitere Abstandssensor
- 30: Doppelpfeil
- 32: mittlerer Abschnitt
- 34: Aktor
- 36: Schwenkachse

## Patentansprüche

1. Feldspritze mit einer sich im Wesentlichen quer zur Fahrtrichtung erstreckenden Auslegervorrichtung (6), die über zumindest einen Aktor (34) um die Schwenkachse (36) schwenkbar ist, **dadurch gekennzeichnet, dass** an der Auslegervorrichtung (6) ein Beschleunigungssensor (12) angeordnet ist, über den eine Neigungsbewegung (13) der Auslegervorrichtung (6) ermittelbar ist.

2. Feldspritze nach Anspruch 1, wobei über den Beschleunigungssensor Drehratensensor oder Gyroskop ist.

3. Feldspritze nach Anspruch 1 oder 2, wobei über den Beschleunigungssensor (12) eine etwa senkrechte translatorische Beschleunigung ermittelbar ist und wobei der Beschleunigungssensor (12) beabstandet zur Schwenkachse (36) angeordnet ist.

4. Feldspritze nach Anspruch 3, wobei der Beschleunigungssensor (12) an einem äußeren Endabschnitt (10) der Auslegervorrichtung (6) angeordnet ist.

5. Feldspritze nach einem der vorhergehenden Ansprüche mit einem Rahmen (16), an dem ein weiterer rahmenfester Beschleunigungssensor (20) angebracht ist.

6. Feldspritze nach Anspruch 5 mit einer Steuereinheit (18), über die der Aktor (34) in Abhängigkeit von Messsignalen der Beschleunigungssensoren (12, 20) ansteuerbar ist, wobei der rahmenfeste Beschleunigungssensor (20) und die Steuereinheit (18) auf einer gemeinsamen Leiterplatte angeordnet sind.

7. Feldspritze nach einem der vorhergehenden Ansprüche, wobei der Beschleunigungssensor ein Sechs-Achsen-Beschleunigungssensor (20) ist.

8. Feldspritze nach einem der Ansprüche 1 bis 6, wobei der Beschleunigungssensor ein Neun-Achsen-Beschleunigungssensor ist.

9. Feldspritze nach einem der vorhergehenden Ansprüche, wobei an der Auslegervorrichtung (6) ein mittlerer Abstandssensor (24) angeordnet ist.

10. Feldspritze nach einem der vorhergehenden Ansprüche, wobei an der Auslegervorrichtung (6) zwei äußere Abstandssensoren (26) angeordnet sind.

11. Feldspritze nach einem der vorhergehenden Ansprüche, die als angehängte Feldspritze (1) mit zwei Achsen (3) und mit einer elektronischen Zwangslenkung ausgebildet ist.
